# EUROPÄISCHE PATENTANMELDUNG

(11) **EP 1 107 442 A2**
(43) Veröffentlichungstag der Anmeldung: **13.06.2001**
(21) Anmeldenummer: 00250413.2
(22) Anmeldetag: 30.11.2000
(51) Int. Cl.: H02P 3/12

(54) **Schaltungsanordnung zur Kurzschlussbremsung eines Gleichstrommotors**

(30) Priorität: 07.12.1999 DE 19959785
(71) Anmelder: SIEMENS AKTIENGESELLSCHAFT, 80333 München (DE)
(72) Erfinder: Franke, Henry, 13189 Berlin (DE); Pancke, Andreas, 13507 Berlin (DE); Rehaag, Hans, 16341 Zepernick (DE); Roehl, Wolfgang, 13503 Berlin (DE)

(57) **Zusammenfassung**

Bei bekannten Kurzschlußbremsschaltungen besteht das Problem, dass eine Wiedereinschaltung verhindert werden muß, solange der kurzschließende Schalttransistor noch angesteuert ist. Die Schaltung sieht hierzu vor, dass an den Motorklemmen ein Schalttransistor (D4) so parallel geschaltet ist, dass seine Source-Seite mit der Plusklemme (+), seine Drain-Seite mit der Minusklemme (-) und sein Gate mit einem Spannungsteiler, bestehend aus einem Widerstand (R1x) und einem Kondensator (C1), verbunden sind, wobei der Widerstand (R1x) an der Plusklemme (+) und der Kondensator (C1) an der Minusklemme (-) des Motors liegen, und parallel zum Kondensator (C1) eine Diode (D2) derart angeordnet ist, dass sie anodenseitig an der Minusklemme (-) des Elektromotors und katodenseitig am Minuspol der Eingangsspannung liegt und dass die Plusklemme (+) des Motors mit dem Pluspol der Eingangsspannung verbunden ist.

Die Schaltung ist z. B. für Antriebe von Leistungsschaltern geeignet.

## Beschreibung

Die Erfindung betrifft eine Schaltungsanordnung zur Kurzschlussbremsung eines Gleichstrommotors, an dessen Motorklemmen ein Schalttransistor so parallel geschaltet ist, dass seine Source-Seite mit der Plusklemme, seine Drain-Seite mit der Minusklemme und sein Gate mit einem Spannungsteiler, bestehend aus einem Widerstand und einem Kondensator, verbunden sind, wobei der Widerstand an der Plusklemme und der Kondensator an der Minusklemme des Motors liegen, dessen Plusklemme mit dem Pluspol der Eingangsspannung verbunden ist. Eine solche Schaltungsanordnung ist durch die DE 43 33 064 A1 bekannt geworden.

Bedingt durch die Masse der drehenden Teile eines Elektromotors und die Masse des von der Motorwelle angetriebenen Bauteils, einschließlich eines z. B. dazwischen befindlichen Getriebes, läuft ein Elektromotor nach dem Ausschalten noch eine gewisse Zeit nach. Für verschiedene Anwendungen ist diese Eigenschaft nicht erwünscht. Insbesondere Getriebemotoren werden deshalb oft mit einer mechanischen Bremse ausgerüstet, die magnetisch gelöst wird und beim gleichzeitigen Ausschalten von Elektromotor und Betätigungsmagnet den Motor an der Welle abbremst.

Eine mechanische Bremse hat allerdings den Nachteil, dass im gelösten Zustand ständig zusätzliche Energie zum Halten der Bremse benötigt wird. Für kleine Antriebe mit möglichst geringem Einbauvolumen steht überdies auch kein Platz für eine Bremse zur Verfügung.

Es ist außerdem bekannt, Elektromotoren nach dem Ausschalten durch Kurzschlussbremsung zu bremsen. Nach Wegfall der Betriebsspannung geht der Elektromotor bei weiterer Rotation in den generatorischen Betrieb über. Werden die Motorklemmen kurzgeschlossen, so wird die verbliebene mechanische Energie durch die Kurzschlußleistung verbraucht und der Motor kommt in kurzer Zeit zum Stillstand. Zum Kurzschließen kann ein elektrischer Schalter, z.B. ein Schalttransistor herangezogen werden, der von der generatorisch erzeugten Motorspannung selbst angesteuert wird.

Problem derartiger Kurzschlussbremsschaltungen ist, dass ausgeschlossen werden muß, dass der Kurzschluß beim kurz nach dem Ausschalten erfolgendem Wiedereinschalten der Netzspannung bestehen bleibt.

Aus der JP-A06178567 ist z. B. eine Kurzschlussbremsschaltung für einen Wechselstrommotor bekannt, nach der je ein Thyristor für die positive und die negative Halbwelle der Motorspannung parallel zu den Motorklemmen angeordnet ist, der beim Bremsen über einen die Spannung am Gate des Thyristors beeinflussenden Opto-Mosfet angesteuert wird.

Da Thyristoren die Eigenschaft haben, dass sie nach der Zündung so lange leitend bleiben, bis der Strom wieder auf Null gegangen ist, muß bei dieser Schaltung zusätzlich dafür gesorgt werden, dass der Inverter erst dann wieder in Betrieb genommen werden kann, wenn die Motorspannung abgeklungen ist, dass heißt, der Motor zum Stillstand gekommen ist. Abgesehen von dem Schaltungsaufwand, der hierfür betrieben werden muß, kann für viele Anwendungsfälle, z. B. wenn der Elektromotor zum Einschalten eines Leistungsschalters dient, eine solche Verzögerung jedoch nicht akzeptiert werden kann.

Der Erfindung liegt die Aufgabe zu Grunde, eine Schaltungsanordnung zum Kurzschlussbremsen anzugeben, die selbsttätig einen generatorischen Betrieb erkennt und darauf einen Kurz-schluss einleitet und die gegebenenfalls diesen nach Wieder-einschaltung des Motors wieder aufhebt.

Erfindungsgemäß wird die Aufgabe gelöst durch die Merkmale des Anspruchs 1 in Verbindung mit dem Oberbegriff. Zweckmäßi-ge Ausgestaltungen sind Gegenstand der Unteransprüche.

Danach wird an den Motorklemmen ein Schalttransistor so parallel geschaltet, dass seine Source-Seite mit der Plusklemme, seine Drain-Seite mit der Minusklemme und sein Gate mit einem Spannungsteiler, bestehend aus einem Widerstand und einem Kondensator, verbunden sind. Der Widerstand liegt an der Plusklemme und der Kondensator an der Minusklemme des Motors. Parallel zum Kondensator ist eine Diode derart angeordnet, dass sie anodenseitig an der Minusklemme des Elektromotors und katodenseitig am Minuspol der Eingangsspannung liegt. Die Plusklemme des Motors ist mit der Plusklemme der Eingangs-spannung verbunden.

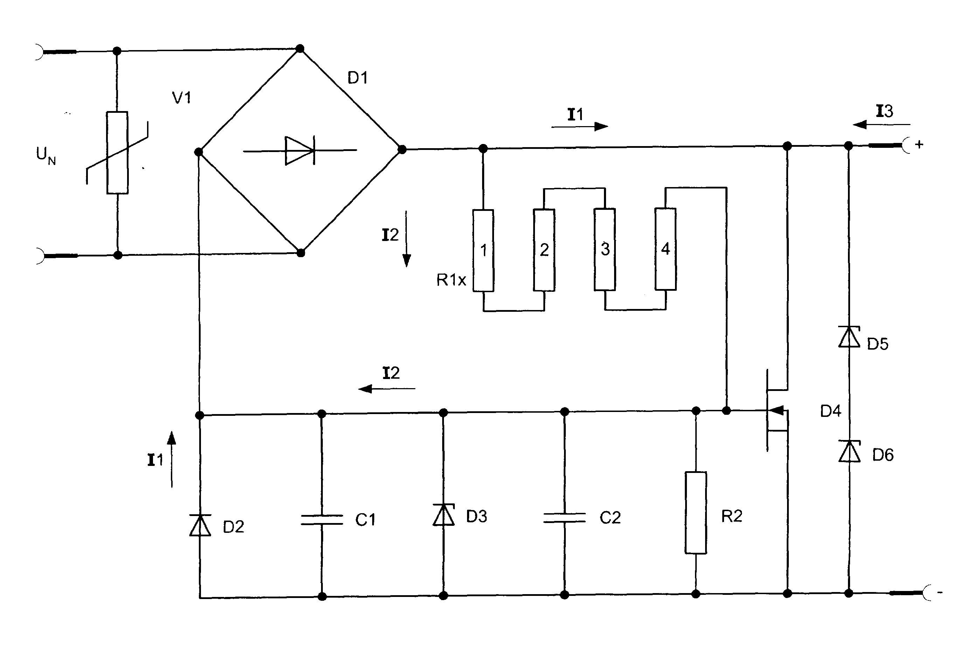

Die Wirkungsweise und Vorteile der Erfindung werden nachfolgend anhand eines Ausführungsbeispiels näher erläutert. Die Zeichnung zeigt die Schaltungsanordnung.

Der Motor wird an der Plusklemme + und an der Minusklemme - mit einer Gleichspannung versorgt. Die Gleichspannung wird im beschriebenen Ausführungsbeispiel über einen Gleichrichter D1 von einer Netzspannung U_{N} bereitgestellt.

Der Motorstrom I1 fließt beim Motorbetrieb über den Gleichrichter D1 und eine Diode D2, wobei sich an der Diode D2 eine Spannung von -0,7 V einstellt, die dann auch am Gate eines zu den Motorklemmen parallel geschalteten Schalttransistors D4 anliegt. Der Schalttransistor D4 ist damit gesperrt. Der zum Motorstrom parallele Strom I2 durch einen Widerstand R1x ist vernachlässigbar klein.

Wird der Motor nun durch Trennen des Gleichrichters D1 von der Netzspannung U_{N} ausgeschaltet, so läuft er generatorisch weiter. Der Stromfluss dreht sich dabei zum Strom I3 um. Über den Widerstand R1X wird darauf ein Kondensator C1, der parallel zur Diode D2 geschaltet ist, von einer negativen Spannung (-0,7 V) auf eine positive Spannung umgeladen. Die Spannung steigt am Gate des Schalttransistors D4 über die Schaltspannung an und schaltet den Schalttransistor D4 durch und leitet damit einen Kurzschluß ein. Die Spannung am Motor fällt darauf schnell ab, wobei gleichzeitig der Motor gebremst wird. Die RC-Kombination R1X/C1 läßt sich so bemessen, dass die Spannung am Gate des Schalttransistors D4 auch bei Abklingen der Gleichspannung beim Umsteuern des Gleichrichters D1 an den Nulldurchgängen der Netzspannung U_{N} unter der Schaltspannung bleibt.

Wird während des Bremsens die Netzspannung U_{N} wieder eingeschaltet so lädt sich aufgrund des Stromflusses über die Diode D2 der Kondensator C1 sofort wieder um und steuert damit den Schalttransistor D4 wieder auf Sperren.

Durch Überbrücken von Einzelwiderständen von R1X läßt sich eine Anpassung an verschiedene Netzspannungen U_{N} erreichen.

Eine Z-Diode D3 schützt den Transistor vor zu hohen Gatespan-nungen. Der Widerstand R2 und der Kondensator C2 sind als Schutz für Störsignale eingesetzt. Schnelle Z-Dioden D5 und D6 schützen den Schalttransistor D4 vor hohen Spannungsspitzen von der Motorseite her, der Varistor V1 schützt die komplette Schaltung vor Spannungsspitzen aus dem Netz.

Mit der Bremsschaltung kann z.B. an einem Getriebemotor der Nachlaufwinkel auf 25% des Wertes ohne Bremsung verringert werden.

## Patentansprüche

1. Schaltungsanordnung zur Kurzschlussbremsung eines Gleichstrommotors, an dessen Motorklemmen ein Schalttransistor (D4) so parallel geschaltet ist, dass seine Source-Seite mit der Plusklemme (+), seine Drain-Seite mit der Minusklemme (-) und sein Gate mit einem Spannungsteiler, bestehend aus einem Widerstand (R1x) und einem Kondensator (C1), verbunden sind, wobei der Widerstand (R1x) an der Plusklemme (+) und der Kondensator (C1) an der Minusklemme (-) des Motors liegen, dessen Plusklemme (+) mit dem Pluspol der Eingangsspannung verbunden ist,
**dadurch gekennzeichnet,**
dass parallel zum Kondensator (C1) eine Diode (D2) derart angeordnet ist, dass sie anodenseitig an der Minusklemme (-) des Elektromotors und katodenseitig am Minuspol der Eingangsspannung liegt.
